# EUROPEAN PATENT APPLICATION

(11) **EP 4 672 840 A1**
(43) Date of publication of application: **31.12.2025**
(21) Application number: 23923279.6
(22) Date of filing: 21.02.2023
(51) Int. Cl.: H04W 72/20, H04L 43/0852

(54) **METHOD AND APPARATUS FOR SENDING INFORMATION, METHOD AND APPARATUS FOR RECEIVING INFORMATION, AND READABLE STORAGE MEDIUM**

(71) Applicant: Beijing Xiaomi Mobile Software Co., Ltd., Beijing 100085 (CN)
(72) Inventor: FU, Ting, Beijing 100085 (CN)
(74) Representative: Dehns Germany Partnerschaft mbB
(86) International application number: PCT/CN2023/077461
(87) International publication number: WO 2024/174095

(57) **Abstract**

The present disclosure is applied to the technical field of wireless communications. Provided are a method and apparatus for sending information, a method and apparatus for receiving information, and a readable storage medium. The method for sending information, which is executed by a network device, comprises: sending scheduling control information to a user equipment; and sending to the user equipment information for indicating a compensation duration, wherein the scheduling control information comprises at least one of the following pieces of information: a first scheduling delay, which is used for determining a data scheduling delay, and a first feedback delay, which is used for determining a data feedback delay.

## Description

### TECHNICAL FIELD

The present disclosure relates to the field of wireless communication technologies and, in particular, to a method and an apparatus for sending information, a method and an apparatus for receiving information, and a readable storage medium.

### BACKGROUND

User Equipment (User Equipment, UE) may need to perform an energy collecting process to obtain power for communication. Different user equipment may vary in power storage capacity and power collecting capability. Network devices can schedule different user equipment in different ways. It is necessary to consider how to perform more reasonable communication scheduling for different user equipment.

### SUMMARY

The present disclosure provides a method and an apparatus for sending information, a method and an apparatus for receiving information, and a readable storage medium.

In a first aspect, a method for sending information is provided, performed by a network device, the method including:
sending scheduling control information to a user equipment; and
sending information indicating a compensation duration to the user equipment;
where the scheduling control information includes at least one of the following:
   a first scheduling latency configured to determine a data scheduling latency, where the data scheduling latency represents an interval between a first time unit and a second time unit, the first time unit is a time unit in which the scheduling control information is located, and the second time unit is a time unit in which data information scheduled by the scheduling control information is located;
   a first feedback latency configured to determine a data feedback latency, where the data feedback latency represents an interval between a third time unit and a fourth time unit, the third time unit is a time unit in which data information scheduled by the scheduling control information is located, the fourth time unit is a time unit in which feedback information is located, and the feedback information is for the data information scheduled by the scheduling control information.

In some possible implementations, when the data information scheduled by the scheduling control information includes a plurality of pieces of data information, the second time unit is a time unit in which the first piece of data information among the plurality of pieces of data information is located, the third time unit is a time unit in which any one piece of data information among the plurality of pieces of data information is located, and the feedback information is for at least one piece of data information among the plurality of pieces of data information.

In some possible implementations, when the data information scheduled by the scheduling control information is downlink data information, the scheduling control information includes at least one of the first scheduling latency and the first feedback latency.

In some possible implementations, when the data information scheduled by the scheduling control information is uplink data information, the scheduling control information includes the first scheduling latency.

In some possible implementations, sending the information indicating the compensation duration to the user equipment includes:
sending user equipment-specific signaling to the user equipment, where the user equipment-specific signaling includes the information indicating the compensation duration.

In some possible implementations, the method further includes:
receiving a communication recovery duration sent by the user equipment; and
determining the compensation duration based on the communication recovery duration.

In some possible implementations, the method further includes:
receiving recommendation information sent by the user equipment, where the recommendation information includes at least one candidate compensation duration.

In some possible implementations, the compensation duration includes at least one of a first duration and a second duration, the first duration is configured to compensate for the first scheduling latency, and the second duration is configured to compensate for the first feedback latency.

In some possible implementations, a sum of the first duration and the first scheduling latency is the data scheduling duration, and a sum of the second duration and the first feedback latency is the data feedback latency.

In some possible implementations, the method further includes:
determining at least one of the first duration and the second duration according to a protocol specification.

In some possible implementations, the compensation duration includes a third duration, and the third duration is configured to compensate for the first scheduling latency and the first feedback latency.

In some possible implementations, a sum of the third duration and the first scheduling latency is the data scheduling duration, and a sum of the third duration and the first feedback latency is the data feedback latency.

In some possible implementations, the method further includes:
determining the third duration according to a protocol specification.

In a second aspect, a method for receiving information is provided, performed by a user equipment, the method including:
receiving scheduling control information sent by a network device;
receiving information indicating a compensation duration sent by the network device; and
determining at least one of a data scheduling latency and a data feedback latency;
where the scheduling control information includes at least one of the following:
   a first scheduling latency configured to determine the data scheduling latency, where the data scheduling latency represents an interval between a first time unit and a second time unit, the first time unit is a time unit in which the scheduling control information is located, and the second time unit is a time unit in which data information scheduled by the scheduling control information is located;
   a first feedback latency configured to determine the data feedback latency, where the data feedback latency represents an interval between a third time unit and a fourth time unit, the third time unit is a time unit in which data information scheduled by the scheduling control information is located, the fourth time unit is a time unit in which feedback information is located, and the feedback information is for the data information scheduled by the scheduling control information.

In some possible implementations, when the data information scheduled by the scheduling control information includes a plurality of pieces of data information, the second time unit is a time unit in which the first piece of data information among the plurality of pieces of data information is located, the third time unit is a time unit in which any one piece of data information among the plurality of pieces of data information is located, and the feedback information is for at least one piece of data information among the plurality of pieces of data information.

In some possible implementations, when the data information scheduled by the scheduling control information is downlink data information, the scheduling control information includes at least one of the first scheduling latency and the first feedback latency.

In some possible implementations, when the data information scheduled by the scheduling control information is uplink data information, the scheduling control information includes the first scheduling latency.

In some possible implementations, receiving the information indicating the compensation duration sent by the network device includes:
receiving user equipment-specific signaling sent by the network device, where the user equipment-specific signaling includes the information indicating the compensation duration.

In some possible implementations, the method further includes:
sending a communication recovery duration to the network device, where the communication recovery duration is configured to determine the compensation duration.

In some possible implementations, the method further includes:
sending recommendation information to the network device, where the recommendation information includes at least one candidate compensation duration.

In some possible implementations, the compensation duration includes at least one of a first duration and a second duration, the first duration is configured to compensate for the first scheduling latency, and the second duration is configured to compensate for the first feedback latency.

In some possible implementations, the method further includes:
determining at least one of the first duration and the second duration according to a protocol specification.

In some possible implementations, determining the at least one of the data scheduling latency and the data feedback latency includes at least one of the following:
determining the data scheduling latency based on the first scheduling latency and the first duration;
determining the data feedback latency based on the first feedback latency and the second duration.

In some possible implementations, determining the data scheduling latency based on the first scheduling latency and the first duration includes:
determining a sum of the first scheduling latency and the first duration as the data scheduling latency.

In some possible implementations, determining the data feedback latency based on the first feedback latency and the second duration includes:
determining a sum of the first feedback latency and the second duration as the data feedback latency.

In some possible implementations, the compensation duration includes a third duration, and the third duration is configured to compensate for the first scheduling latency and the first feedback latency.

In some possible implementations, the method further includes:
determining the third duration according to a protocol specification.

In some possible implementations, determining the at least one of the data scheduling latency and the data feedback latency includes at least one of the following:
determining the data scheduling latency based on the first scheduling latency and the third duration;
determining the data feedback latency based on the first feedback duration and the third duration.

In some possible implementations, determining the data scheduling latency based on the first scheduling latency and the third duration includes:
determining a sum of the first scheduling latency and the third duration as the data scheduling latency.

In some possible implementations, determining the data feedback latency based on the first feedback latency and the third duration includes:
determining a sum of the first feedback latency and the third duration as the data feedback latency.

In some possible implementations, the method further includes:
determining at least one of the data scheduling latency and the data feedback latency according to a protocol specification.

In a third aspect, an apparatus for sending information is provided, configured in a network device, the apparatus including:
a transceiver module, configured to send scheduling control information to a user equipment;
the transceiver module further configured to send information indicating a compensation duration to the user equipment;
where the scheduling control information includes at least one of the following:
   a first scheduling latency configured to determine a data scheduling latency, where the data scheduling latency represents an interval between a first time unit and a second time unit, the first time unit is a time unit in which the scheduling control information is located, and the second time unit is a time unit in which data information scheduled by the scheduling control information is located;
   a first feedback latency configured to determine a data feedback latency, where the data feedback latency represents an interval between a third time unit and a fourth time unit, the third time unit is a time unit in which data information scheduled by the scheduling control information is located, the fourth time unit is a time unit in which feedback information is located, and the feedback information is for the data information scheduled by the scheduling control information.

In a fourth aspect, an apparatus for receiving information is provided, configured in a user equipment, the apparatus including:
a transceiver module, configured to receive scheduling control information sent by a network device;
the transceiver module further configured to receive information indicating a compensation duration sent by the network device; and
a processing module, configured to determine at least one of a data scheduling latency and a data feedback latency;
where the scheduling control information includes at least one of the following:
   a first scheduling latency configured to determine the data scheduling latency, where the data scheduling latency represents an interval between a first time unit and a second time unit, the first time unit is a time unit in which the scheduling control information is located, and the second time unit is a time unit in which data information scheduled by the scheduling control information is located;
   a first feedback latency configured to determine the data feedback latency, where the data feedback latency represents an interval between a third time unit and a fourth time unit, the third time unit is a time unit in which data information scheduled by the scheduling control information is located, the fourth time unit is a time unit in which feedback information is located, and the feedback information is for the data information scheduled by the scheduling control information.

In a fifth aspect, an electronic device is provided, including one or more processors and a memory, where:
the memory is configured to store a computer program; and
the one or more processors are configured to execute the computer program to implement the method of the first aspect or any possible design of the first aspect.

In a sixth aspect, an electronic device is provided, including one or more processors and a memory, where:
the memory is configured to store a computer program; and
the one or more processors are configured to execute the computer program to implement the method of the second aspect or any possible design of the second aspect.

In a seventh aspect, a computer-readable storage medium is provided. The computer-readable storage medium has stored therein instructions that, when invoked and executed on a computer, cause the computer to perform the first aspect or any possible design of the first aspect.

In an eighth aspect, a computer-readable storage medium is provided. The computer-readable storage medium has stored therein instructions that, when invoked and executed on a computer, cause the computer to perform the second aspect or any possible design of the second aspect.

In a ninth aspect, a communication system is provided. The communication system includes a user equipment and a network device, where the network device is configured to perform the first aspect or any possible design of the first aspect; and the user equipment is configured to perform the second aspect or any possible design of the second aspect.

In the present disclosure, in response to the problem that after a UE receives data sent by a network device, it needs a period of time to collect energy before responding to the network device or performing corresponding operations, in order to ensure scheduling flexibility and enable the network device to schedule users on different time domain resources, a first scheduling latency and a first feedback latency are provided, and to account for energy collecting, a compensation duration is provided. The network device sends to the UE the first scheduling latency and/or the first feedback latency, as well as the compensation duration, and the UE determines a data scheduling latency and/or a data feedback latency according to the received first scheduling latency and/or first feedback latency, as well as the compensation duration, which enables the UE to determine, according to the data scheduling latency and/or the data feedback latency, the time required from energy collecting to having sufficient energy to respond to the network device or perform corresponding operations, thereby allowing the UE to complete the response to the network device or to perform corresponding operations according to the determined time.

### BRIEF DESCRIPTION OF DRAWINGS

The drawings described herein are used to provide a further understanding of embodiments of the present disclosure and constitute a part of the present disclosure. The schematic embodiments of the present disclosure and the descriptions thereof are used to explain the embodiments of the present disclosure and do not constitute an improper limitation of the embodiments of the present disclosure.

The drawings herein are incorporated into and constitute a part of this specification, illustrate embodiments consistent with the embodiments of the present disclosure, and together with the specification serve to explain the principles of the embodiments of the present disclosure.
FIG. 1 is a schematic diagram of a wireless communication system architecture according to an embodiment of the present disclosure.
FIG. 2 is a schematic interaction diagram for sending and receiving information according to an embodiment of the present disclosure.
FIG. 3 is another schematic interaction diagram for sending and receiving information according to an embodiment of the present disclosure.
FIG. 4 is another schematic interaction diagram for sending and receiving information according to an embodiment of the present disclosure.
FIG. 5 is another schematic interaction diagram for sending and receiving information according to an embodiment of the present disclosure.
FIG. 6 is another schematic interaction diagram for sending and receiving information according to an embodiment of the present disclosure.
FIG. 7 is another schematic interaction diagram for sending and receiving information according to an embodiment of the present disclosure.
FIG. 8 is another schematic interaction diagram for sending and receiving information according to an embodiment of the present disclosure.
FIG. 9 is another schematic interaction diagram for sending and receiving information according to an embodiment of the present disclosure.
FIG. 10 is a flowchart for sending information according to an embodiment of the present disclosure.
FIG. 11 is another flowchart for sending information according to an embodiment of the present disclosure.
FIG. 12 is another flowchart for sending information according to an embodiment of the present disclosure.
FIG. 13 is another flowchart for sending information according to an embodiment of the present disclosure.
FIG. 14 is another flowchart for sending information according to an embodiment of the present disclosure.
FIG. 15 is a flowchart for receiving information according to an embodiment of the present disclosure.
FIG. 16 is another flowchart for receiving information according to an embodiment of the present disclosure.
FIG. 17 is another flowchart for receiving information according to an embodiment of the present disclosure.
FIG. 18 is another flowchart for receiving information according to an embodiment of the present disclosure.
FIG. 19 is another flowchart for receiving information according to an embodiment of the present disclosure.
FIG. 20 is another flowchart for receiving information according to an embodiment of the present disclosure.
FIG. 21 is another flowchart for receiving information according to an embodiment of the present disclosure.
FIG. 22 is another flowchart for receiving information according to an embodiment of the present disclosure.
FIG. 23 is a structural diagram of an apparatus for sending information according to an embodiment of the present disclosure.
FIG. 24 is another structural diagram of an apparatus for sending information according to an embodiment of the present disclosure.
FIG. 25 is a structural diagram of an apparatus for receiving information according to an embodiment of the present disclosure.
FIG. 26 is another structural diagram of an apparatus for receiving information according to an embodiment of the present disclosure.

### DETAILED DESCRIPTION

The embodiments of the present disclosure will be further described with reference to the drawings and specific implementations.

Exemplary embodiments will be described in detail herein, examples of which are illustrated in the accompanying drawings. When the following description refers to the drawings, the same numerals in different drawings refer to the same or similar elements unless otherwise indicated. The implementations described in the following exemplary embodiments do not represent all implementations consistent with the embodiments of the present disclosure. Instead, they are merely examples of apparatuses and methods consistent with some aspects of the present disclosure as detailed in the appended claims.

The terms used in the embodiments of the present disclosure are for the purpose of describing particular embodiments only and are not intended to limit the embodiments of the present disclosure. As used in the embodiments of the present disclosure and the appended claims, the singular forms "a," "an," and "the" are intended to include the plural forms as well, unless the context clearly indicates otherwise. It should also be understood that the term "and/or" as used herein refers to and encompasses any and all possible combinations of one or more of the associated listed items.

It should be understood that although the terms first, second, third, etc. may be used in the embodiments of the present disclosure to describe various information, such information should not be limited by these terms. These terms are only used to distinguish information of the same type from each other. For example, without departing from the scope of the embodiments of the present disclosure, first indication information may also be referred to as second indication information, and similarly, second indication information may also be referred to as first indication information. Depending on the context, the words "if' and "in case" as used herein may be interpreted as "at the time of" or "when" or "in response to determining."

Embodiments of the present disclosure are described in detail below, examples of which are illustrated in the accompanying drawings, where the same or similar reference numerals refer to the same or similar elements throughout. The embodiments described below with reference to the drawings are exemplary and are intended to explain the present disclosure and should not be construed as limiting the present disclosure.

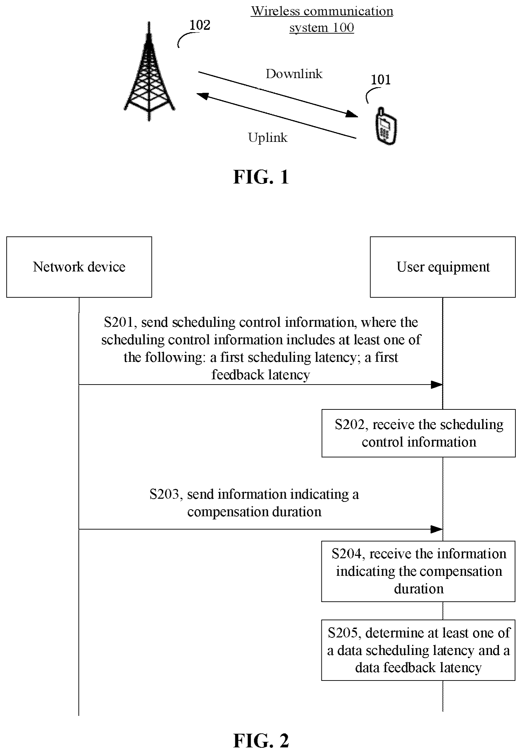

As shown in FIG. 1, methods provided in embodiments of the present disclosure may be applied to a wireless communication system 100, which may include a user equipment 101, a network device 102, with no limit on the number of included devices.

It should be understood that the wireless communication system 100 described above is applicable to both low-frequency and high-frequency scenarios. Application scenarios of the wireless communication system 100 include, but are not limited to, a long term evolution (long term evolution, LTE) system, a LTE frequency division duplex (frequency division duplex, FDD) system, a LTE time division duplex (time division duplex, TDD) system, a worldwide interoperability for micro wave access (worldwide interoperability for micro wave access, WiMAX) communication system, a cloud radio access network (cloud radio access network, CRAN) system, a future 5th-Generation (5th-Generation, 5G) system, a new radio (new radio, NR) communication system or a future evolved public land mobile network (public land mobile network, PLMN) system.

The user equipment 101 above may be a terminal (terminal), an access user equipment, a user equipment unit, a user equipment station, a mobile station (mobile station, MS), a remote station, a remote user equipment, a mobile user equipment (mobile terminal), a wireless communication device, a user equipment agent, etc. The user equipment 101 may have a wireless transceiving function, enabling it to communicate (e.g., wirelessly) with one or more network devices of one or more communication systems and receive network services provided by the network devices. The network devices here include, but are not limited to, the illustrated network device 102.

The user equipment 101 may be a cellular phone, a cordless phone, a session initiation protocol (session initiation protocol, SIP) phone, a wireless local loop (wireless local loop, WLL) station, a personal digital assistant (personal digital assistant, PDA) device, a handheld device with wireless communication capabilities, a computing device, other processing device connected to a wireless modem, an in-vehicle device, a wearable device, a user equipment in a future 5G network, or a user equipment in a future evolved PLMN network.

For example, the network device 102 may be an access network device (or called access network site). An access network device refers to a device that provides network access functions, such as a radio access network (radio access network, RAN) base station. Specifically, it may include a base station (base station, BS), or a wireless resource management device that includes a base station and is configured to control the base station, etc., and may also include a relay station (relay device), an access point, a base station in a future 5G network, a base station in a future evolved PLMN network, or a NR base station. It may be a wearable device or an in-vehicle device. The network device 102 may also be a communication chip with a communication module.

The UE in the present disclosure may be a low-cost Internet of Things terminal. This type of terminal may not include a battery, and is activated and powered by received electromagnetic signals, or include a battery with a function of minimal power storage, but the battery does not need to be manually charged, and can acquire power from external energy sources, such as through external electromagnetic waves, thermal energy, kinetic energy. Different Internet of Things terminals may have different power acquisition and storage capabilities. When some Internet of Things terminals have low power acquisition and storage capabilities, the available power thereof can only enable an Internet of Things terminal to receive downlink signals, send uplink signals or perform data processing within a certain period of time.

In some possible implementations, the UE in the present disclosure is an Internet of Things terminal with a battery, and the battery does not need to be manually charged, and can automatically acquire energy from the outside. Its power storage capacity can support the terminal to receive downlink signals, send uplink signals or perform data processing within a period of time.

An embodiment of the present disclosure provides a method for sending and receiving information. FIG. 2 is a schematic interaction diagram for sending and receiving information according to an embodiment of the present disclosure. As shown in FIG. 2, the method includes S201-S205.

S201: a network device sends scheduling control information to a UE, where the scheduling control information includes at least one of the following: a first scheduling latency; a first feedback latency.

In the embodiment of the present disclosure, the network device sends scheduling control information including the first scheduling latency to the UE; or, the network device sends scheduling control information including the first feedback latency to the UE; or, the network device sends scheduling control information including the first scheduling latency and the first feedback latency to the UE.

The first scheduling latency is configured to determine a data scheduling latency, where the data scheduling latency represents an interval between a first time unit and a second time unit, the first time unit is a time unit in which the scheduling control information is located, and the second time unit is a time unit in which data information scheduled by the scheduling control information is located.

The first feedback latency is configured to determine a data feedback latency, where the data feedback latency represents an interval between a third time unit and a fourth time unit, the third time unit is a time unit in which data information scheduled by the scheduling control information is located, the fourth time unit is a time unit in which feedback information is located, and the feedback information is for the data information scheduled by the scheduling control information.

The time unit may be a slot, a mini-slot, a half-slot, a subframe, a half-frame, a frame or a symbol, etc., and the feedback information may be HARQ-ACK (Hybrid Automatic Repeat Request Acknowledgement, Hybrid Automatic Repeat Request Acknowledgement) or other feedback information.

In some possible implementations, the first scheduling latency and the first feedback latency are selected by the network device from a plurality of preset candidate values.

In some possible implementations, the data information scheduled by the scheduling control information is one or more pieces.

In a case where the data information scheduled by the scheduling control information is one piece of data information, the second time unit is a time unit in which the one piece of data information scheduled by the scheduling control information is located, the third time unit is a time unit in which the one piece of data information scheduled by the scheduling control information is located, and the feedback information is for the one piece of data information scheduled by the scheduling control information.

In a case where the data information scheduled by the scheduling control information is a plurality of pieces of data information, the second time unit is a time unit in which the first piece of data information among the plurality of pieces of data information is located, the third time unit is a time unit in which any one piece of data information among the plurality of pieces of data information is located, the feedback information is for at least one piece of data information among the plurality of pieces of data information, and the feedback information at least includes feedback information of the data information corresponding to the third time unit, where the data information corresponding to the third time unit refers to the data information whose time unit is the third time unit. For example, if the third time unit is the time unit in which the first piece of data information among the plurality of pieces of data information is located, the feedback information at least includes feedback information of the first piece of data information; or, if the third time unit is the time unit in which the last piece of data information among the plurality of pieces of data information is located, the feedback information at least includes feedback information of the last piece of data information. The first piece of data information refers to the data information with the earliest time unit among the plurality of pieces of data information, and the last piece of data information refers to the data information with the latest time unit among the plurality of pieces of data information.

In some possible implementations, the data information scheduled by the scheduling control information may be downlink data information. For example, the downlink data information is PDSCH (Physical Downlink Shared Channel, Physical Downlink Shared Channel). When the data information scheduled by the scheduling control information is the downlink data information, the scheduling control information includes at least one of the first scheduling latency and the first feedback latency.

In some possible implementations, the data information scheduled by the scheduling control information may also be uplink data information. For example, the uplink data information is PUSCH (Physical Uplink Shared Channel, Physical Uplink Shared Channel). When the data information scheduled by the scheduling control information is the uplink data information, the scheduling control information includes the first scheduling latency.

In some possible implementations, the scheduling control information may be DCI (Downlink Control Information, Downlink Control Information). For example, the DCI may be DCI for uplink scheduling, or the DCI may be DCI for downlink scheduling.

For example, when the data information scheduled by the DCI is PDSCH, the data scheduling latency is the interval between the slot where the DCI is located and the slot where the PDSCH is located, and the data feedback latency is the interval between the slot where the PDSCH is located and the slot where the HARQ-ACK corresponding to the PDSCH is located, or the data feedback latency is the interval between the slot where the PDSCH is located and the slot where other feedback information corresponding to the PDSCH is located. When the data information scheduled by the DCI is a plurality of PDSCHs, the data scheduling latency is the interval between the slot where the DCI is located and the slot where the first PDSCH is located, and the first PDSCH is the first PDSCH among the plurality of PDSCHs scheduled by the DCI.

Another example is that when the data information scheduled by the DCI is a PUSCH, the data scheduling latency is the interval between the slot where the DCI is located and the slot where the PUSCH is located; when the data information scheduled by the DCI is a plurality of PUSCHs, the data scheduling latency is the interval between the slot where the DCI is located and the slot where the first PUSCH is located, and the first PUSCH is the first PUSCH among the plurality of PUSCHs scheduled by the DCI.

S202: the UE receives the scheduling control information sent by the network device.

S203: the network device sends information indicating a compensation duration to the UE.

The compensation duration is configured to compensate for the first scheduling latency to determine the data scheduling latency, or the compensation duration is configured to compensate for the first feedback latency to determine the data feedback latency.

In some possible implementations, the durations configured to compensate for the first scheduling latency and the first feedback latency are provided separately. The compensation duration includes at least one of a first duration and a second duration, where the first duration is configured to compensate for the first scheduling latency, the second duration is configured to compensate for the first feedback latency, and the first duration and the second duration may be the same or different.

In some possible implementations, the durations configured to compensate for the first scheduling latency and the first feedback latency are provided together. That is, a common duration is provided for the first scheduling latency and the first feedback latency. The compensation duration includes a third duration, where the third duration is configured to compensate for the first scheduling latency and the first feedback latency.

S204: the UE receives the information indicating the compensation duration sent by the network device.

The execution order of S201 and S202 and the execution order of S203 and S204 can be swapped.

S205: the UE determines at least one of a data scheduling latency and a data feedback latency.

After receiving the scheduling control information and the information indicating the compensation duration, the UE determines the data scheduling latency based on the first scheduling latency and the compensation duration when the scheduling control information includes the first scheduling latency, and determines the data feedback latency based on the first feedback latency and the compensation duration when the scheduling control information includes the first feedback latency.

The first scheduling latency and the first feedback latency are provided to ensure scheduling flexibility and enable the network device to schedule users on different time domain resources, and the compensation duration is provided for energy collecting. Of course, energy collecting can also be performed during the periods corresponding to the first scheduling latency and the first feedback latency. However, the time required for energy collecting is relatively long, so the compensation duration is longer than the first scheduling latency and the first feedback latency, that is, the compensation duration is longer, and the first scheduling latency and the first feedback latency are shorter. For example, the compensation duration is 100 slots, and the first scheduling latency and the first feedback latency are 5 slots.

In the embodiment of the present disclosure, in response to the problem that after a UE receives data sent by a network device, it needs a period of time to collect energy before responding to the network device or performing corresponding operations, in order to ensure scheduling flexibility and enable the network device to schedule users on different time domain resources, a first scheduling latency and a first feedback latency are provided, and to account for energy collecting, a compensation duration is provided. The network device sends to the UE the first scheduling latency and/or the first feedback latency, as well as the compensation duration, and the UE determines, according to the received first scheduling latency and/or first feedback latency, as well as the compensation duration, the time required from energy collecting to having sufficient energy to respond to the network device or perform corresponding operations, thereby allowing the UE to complete the response to the network device or to perform corresponding operations according to the determined time.

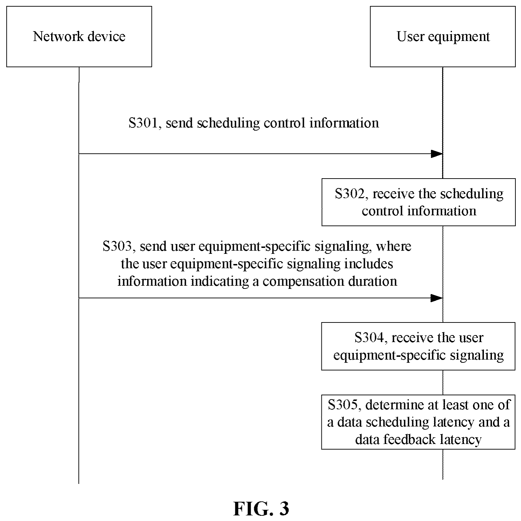

FIG. 3 is another schematic interaction diagram for sending and receiving information according to an embodiment of the present disclosure. As shown in FIG. 3, the method includes S301-S305.

S301: a network device sends scheduling control information to a UE, where the scheduling control information includes at least one of the following: a first scheduling latency; a first feedback latency.

S302: the UE receives the scheduling control information sent by the network device.

S303: the network device sends user equipment-specific signaling to the UE, where the user equipment-specific signaling includes information indicating a compensation duration.

S304: the UE receives the user equipment-specific signaling sent by the network device.

The execution order of S301 and S302 and the execution order of S303 and S304 can be swapped.

S305: the UE determines at least one of a data scheduling latency and a data feedback latency.

In the embodiment of the present disclosure, the network device sends the compensation duration to the UE by sending user equipment-specific signaling.

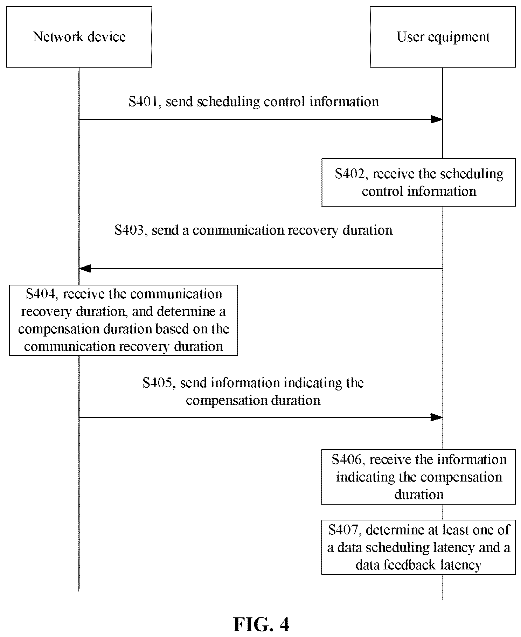

FIG. 4 is another schematic interaction diagram for sending and receiving information according to an embodiment of the present disclosure. As shown in FIG. 4, the method includes S401-S407.

S401: a network device sends scheduling control information to a UE, where the scheduling control information includes at least one of the following: a first scheduling latency; a first feedback latency.

S402: the UE receives the scheduling control information sent by the network device.

S403: the UE sends a communication recovery duration to the network device.

The communication recovery duration refers to a duration required for the UE to resume communication from interruption of communication.

In some possible implementations, the communication recovery duration refers to a duration required for the UE to collect enough energy for the next data transmission or reception from the time when the energy is exhausted.

S404: the network device receives the communication recovery duration sent by the UE, and determines a compensation duration based on the communication recovery duration.

In some possible implementations, the communication recovery duration is determined as the compensation duration. Alternatively, considering that unexpected situations may occur during data transmission and reception, affecting the UE in energy collection, the determined compensation duration is longer than the communication recovery duration, that is, a sum of the communication recovery duration and a preset duration is determined as the compensation duration, where the preset duration is a pre-set duration.

In some possible implementations, the compensation duration includes at least one of a first duration and a second duration, where the first duration is configured to compensate for the first scheduling latency, and the second duration is configured to compensate for the first feedback latency. Then, the network device determines at least one of the first duration and the second duration according to the communication recovery duration.

In some possible implementations, the compensation duration includes a third duration, where the third duration is configured to compensate for the first scheduling latency and the first feedback latency. Then, the network device determines the third duration according to the communication recovery duration.

S405: the network device sends information indicating the compensation duration to the UE.

S406: the UE receives the information indicating the compensation duration sent by the network device.

The execution order of S401 and S402 and the execution order of S403-S406 can be swapped.

S407: the UE determines at least one of a data scheduling latency and a data feedback latency.

In the embodiment of the present disclosure, the scheduling control information includes the first scheduling latency and the first feedback latency, and when determining the data scheduling latency and the data feedback latency, the UE needs to consider not only the first scheduling latency and the first feedback latency but also the time required for the UE itself to collect energy, that is, the compensation duration, which is determined based on the communication recovery duration sent by the UE.

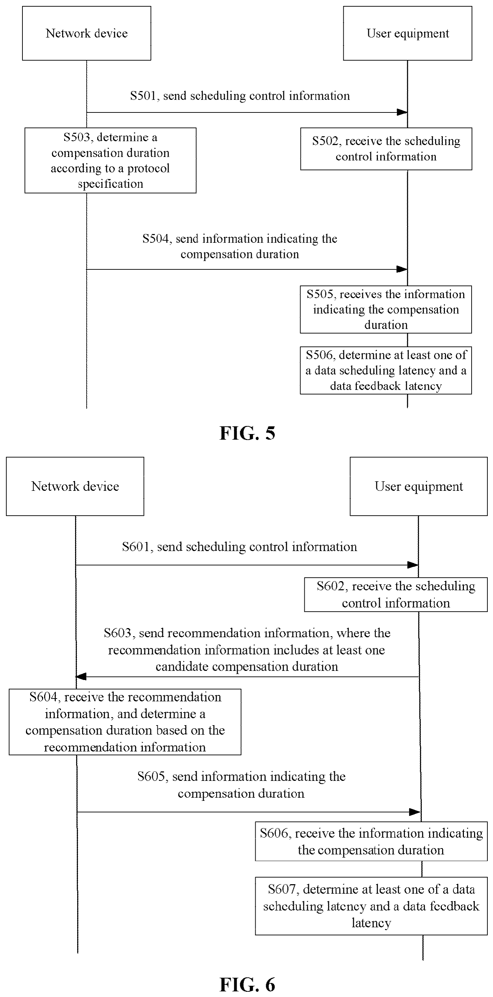

FIG. 5 is another schematic interaction diagram for sending and receiving information according to an embodiment of the present disclosure. As shown in FIG. 5, the method includes S501-S506.

S501: a network device sends scheduling control information to a UE, where the scheduling control information includes at least one of the following: a first scheduling latency; a first feedback latency.

S502: the UE receives the scheduling control information sent by the network device.

S503: the network device determines a compensation duration according to a protocol specification.

When data information scheduled by the scheduling control information is downlink data information including cell public information, the compensation duration is determined according to the protocol specification. For example, the downlink data information is PDSCH including SI and paging information.

In some possible implementations, the compensation duration includes at least one of a first duration and a second duration, where the first duration is configured to compensate for the first scheduling latency, and the second duration is configured to compensate for the first feedback latency. Then, the network device determines at least one of the first duration and the second duration according to the protocol specification.

In some possible implementations, the compensation duration includes a third duration, where the third duration is configured to compensate for the first scheduling latency and the first feedback latency. Then, the network device determines the third duration according to the protocol specification.

S504: the network device sends information indicating the compensation duration to the UE.

S505: the UE receives the information indicating the compensation duration sent by the network device.

The execution order of S501 and S502 and the execution order of S503-S505 can be swapped.

S506: the UE determines at least one of a data scheduling latency and a data feedback latency.

In the embodiment of the present disclosure, for the case where the data information scheduled by the scheduling control information is data information including cell public information, the network device determines the compensation duration according to the protocol specification.

FIG. 6 is another schematic interaction diagram for sending and receiving information according to an embodiment of the present disclosure. As shown in FIG. 6, the method includes S601-S607.

S601: a network device sends scheduling control information to a UE, where the scheduling control information includes at least one of the following: a first scheduling latency; a first feedback latency.

S602: the UE receives the scheduling control information sent by the network device.

S603: the UE sends recommendation information to the network device, where the recommendation information includes at least one candidate compensation duration.

S604: the network device receives the recommendation information sent by the UE, and determines a compensation duration based on the recommendation information.

In some possible implementations, the network device selects one candidate compensation duration from the at least one candidate compensation duration as the compensation duration configured for the UE, or determines a value larger than the selected candidate compensation duration as the compensation duration configured for the UE.

S605: the network device sends information indicating the compensation duration to the UE.

S606: the UE receives the information indicating the compensation duration sent by the network device.

The execution order of S601 and S602 and the execution order of S603 and S606 can be swapped.

S607: the UE determines at least one of a data scheduling latency and a data feedback latency.

In the embodiment of the present disclosure, the UE can determine the compensation duration and report the compensation duration to the network device without the need for the network device to configure the compensation duration for the UE.

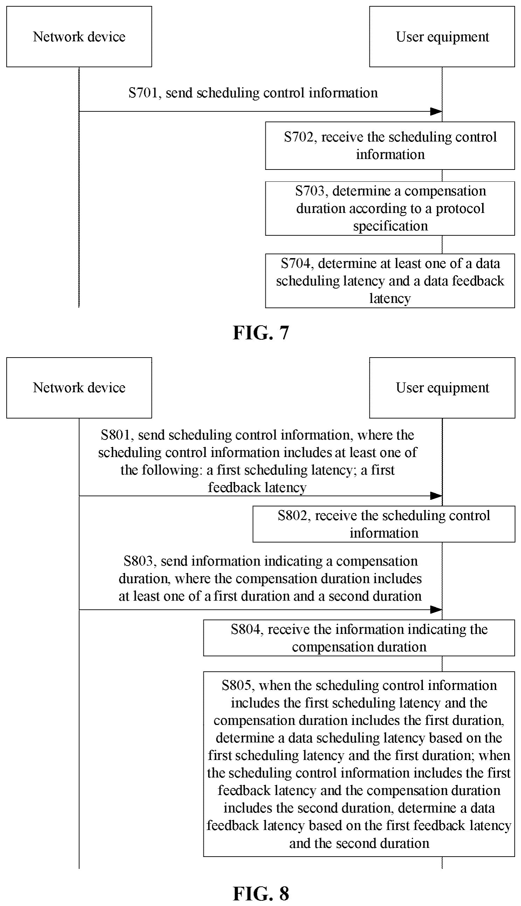

FIG. 7 is another schematic interaction diagram for sending and receiving information according to an embodiment of the present disclosure. As shown in FIG. 7, the method includes S701-S704.

S701: a network device sends scheduling control information to a UE, where the scheduling control information includes at least one of the following: a first scheduling latency; a first feedback latency.

S702: the UE receives the scheduling control information sent by the network device.

S703: the UE determines a compensation duration according to a protocol specification.

When data information scheduled by the scheduling control information is data information including cell public information, the compensation duration is specified by the protocol. For example, the data information is PDSCH including SI (System Information, System Information) and paging information. The data information including cell public information needs to be received by a plurality of UEs in the cell, so for the data information including cell public information, the data scheduling latency or data feedback latency needs to meet the capability characteristics of the plurality of UEs.

In some possible implementations, the compensation duration includes at least one of a first duration and a second duration, where the first duration is configured to compensate for the first scheduling latency, and the second duration is configured to compensate for the first feedback latency. Then, the network device determines at least one of the first duration and the second duration according to the protocol specification.

In some possible implementations, the compensation duration includes a third duration, where the third duration is configured to compensate for the first scheduling latency and the first feedback latency. Then, the network device determines the third duration according to the protocol specification.

The execution order of S701 and S702 and the execution order of S703 can be swapped.

S704: the UE determines at least one of a data scheduling latency and a data feedback latency.

In the embodiment of the present disclosure, the UE can determine the compensation duration according to the protocol specification without the need for the network device to configure the compensation duration for the UE.

FIG. 8 is another schematic interaction diagram for sending and receiving information according to an embodiment of the present disclosure. As shown in FIG. 8, the method includes S801-S805.

S801: a network device sends scheduling control information to a UE, where the scheduling control information includes at least one of the following: a first scheduling latency; a first feedback latency.

S802: the UE receives the scheduling control information sent by the network device.

S803: the network device sends information indicating a compensation duration to the UE, where the compensation duration includes at least one of a first duration and a second duration.

S804: the UE receives the information indicating the compensation duration sent by the network device.

The implementations of S801-S804 are the same as those of S201-S204, and will not be repeated here.

S805: when the scheduling control information includes the first scheduling latency and the compensation duration includes the first duration, the UE determines a data scheduling latency based on the first scheduling latency and the first duration; when the scheduling control information includes the first feedback latency and the compensation duration includes the second duration, the UE determines a data feedback latency based on the first feedback latency and the second duration.

In the embodiment of the present disclosure, the UE can determine the data scheduling duration based on the received first scheduling latency and first duration, that is, compensate for the first scheduling latency based on the first duration to determine the data scheduling latency; the UE can determine the feedback scheduling latency based on the received first feedback latency and second duration, that is, compensate for the first feedback latency based on the second duration to determine the data feedback latency.

In some possible implementations, determining the data scheduling latency based on the first scheduling latency and the first duration includes: determining a sum of the first scheduling latency and the first duration as the data scheduling latency.

In some possible implementations, determining the data feedback latency based on the first feedback latency and the second duration includes: determining a sum of the first feedback latency and the second duration as the data feedback latency.

For example, data information scheduled by DCI is PUSCH, the first scheduling latency included in the DCI is 2 slots, and the first duration is 80 slots, then the data scheduling latency is 82 slots. When the UE receives the DCI in slot n, it can be determined that the UE needs to send the PUSCH in slot n+82.

For example, the data information scheduled by the DCI is PDSCH, the first feedback latency included in the DCI is 1 slot, and the second duration is 80 slots, then the data feedback latency is 81 slots. When the UE receives the PDSCH scheduled by the DCI in slot n, it can be determined that the UE needs to send feedback information for the PDSCH in slot n+81.

In the embodiment of the present disclosure, the UE determines the data scheduling latency or the data feedback latency according to the received first scheduling latency, first feedback latency and compensation duration, so that the UE can complete the response to the network device or perform corresponding operations according to the determined data scheduling latency and data feedback latency.

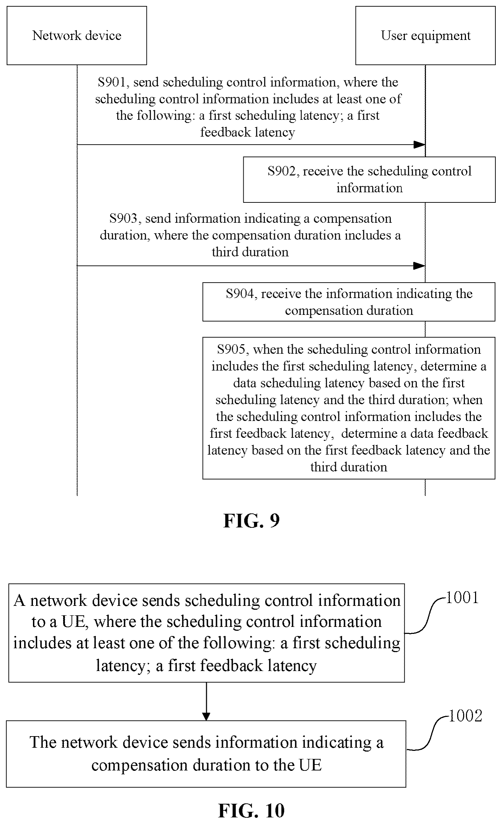

FIG. 9 is another schematic interaction diagram for sending and receiving information according to an embodiment of the present disclosure. As shown in FIG. 9, the method includes S901-S905.

S901: a network device sends scheduling control information to a UE, where the scheduling control information includes at least one of the following: a first scheduling latency; a first feedback latency.

S902: the UE receives the scheduling control information sent by the network device.

S903: the network device sends information indicating a compensation duration to the UE, where the compensation duration includes a third duration.

S904: the UE receives the information indicating the compensation duration sent by the network device.

The implementations of S901-S904 are the same as those of S201-S204, and will not be repeated here.

S905: when the scheduling control information includes the first scheduling latency, the UE determines a data scheduling latency based on the first scheduling latency and the third duration; when the scheduling control information includes the first feedback latency, the UE determines a data feedback latency based on the first feedback latency and the third duration.

In the embodiment of the present disclosure, the UE can determine the data scheduling duration based on the received first scheduling latency and third duration, that is, compensate for the first scheduling latency based on the third duration to determine the data scheduling latency; the UE can determine the feedback scheduling latency based on the received first feedback latency and third duration, that is, compensate for the first feedback latency based on the third duration to determine the data feedback latency.

In some possible implementations, determining the data scheduling latency based on the first scheduling latency and the third duration includes: determining a sum of the first scheduling latency and the third duration as the data scheduling latency.

In some possible implementations, determining the data feedback latency based on the first feedback latency and the third duration includes: determining a sum of the first feedback latency and the third duration as the data feedback latency.

For example, data information scheduled by DCI is PDSCH, the first scheduling latency included in the DCI is 2 slots, the first feedback latency included in the DCI is 1 slot, and the third duration is 80 slots, then the data scheduling latency is 82 slots and the data feedback latency is 81 slots. If the current time is slot n, it can be determined that the UE needs to receive the PDSCH scheduled by the DCI in slot n+82, and send feedback information for the PDSCH in slot n+82+81.

An embodiment of the present disclosure provides a method for sending information, which is performed by a network device.

FIG. 10 is a flowchart for sending information according to an embodiment of the present disclosure. As shown in FIG. 10, the method includes S1001-S1002.

S1001: a network device sends scheduling control information to a UE, where the scheduling control information includes at least one of the following: a first scheduling latency; a first feedback latency.

The implementation of S1001 is the same as that of S201, and will not be repeated here.

S1002: the network device sends information indicating a compensation duration to the UE.

The implementation of S1002 is the same as that of S203, and will not be repeated here.

In the embodiment of the present disclosure, in response to the problem that after a UE receives data sent by a network device, it needs a period of time to collect energy before responding to the network device or performing corresponding operations, in order to ensure scheduling flexibility and enable the network device to schedule users on different time domain resources, a first scheduling latency and a first feedback latency are provided, and to account for energy collecting, a compensation duration is provided. The network device sends to the UE the first scheduling latency and/or the first feedback latency, as well as the compensation duration, and the UE determines, according to the received first scheduling latency and/or first feedback latency, as well as the compensation duration, the time required from energy collecting to having sufficient energy to respond to the network device or perform corresponding operations, thereby allowing the UE to complete the response to the network device or to perform corresponding operations according to the determined time.

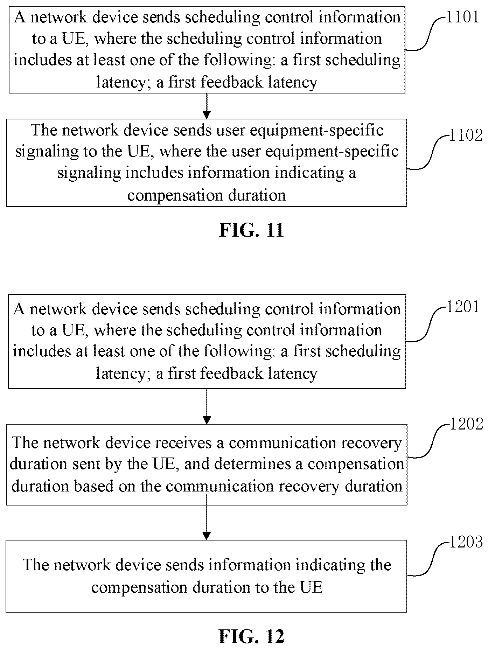

FIG. 11 is another flowchart for sending information according to an embodiment of the present disclosure. As shown in FIG. 11, the method includes S1101-S1102.

S1101: a network device sends scheduling control information to a UE, where the scheduling control information includes at least one of the following: a first scheduling latency; a first feedback latency.

S1102: the network device sends user equipment-specific signaling to the UE, where the user equipment-specific signaling includes information indicating a compensation duration.

FIG. 12 is another flowchart for sending information according to an embodiment of the present disclosure. As shown in FIG. 12, the method includes S1201-S1203.

S1201: a network device sends scheduling control information to a UE, where the scheduling control information includes at least one of the following: a first scheduling latency; a first feedback latency.

S1202: the network device receives a communication recovery duration sent by the UE, and determines a compensation duration based on the communication recovery duration.

The implementation of S1202 is the same as that of S404, and will not be repeated here.

S1203: the network device sends information indicating the compensation duration to the UE.

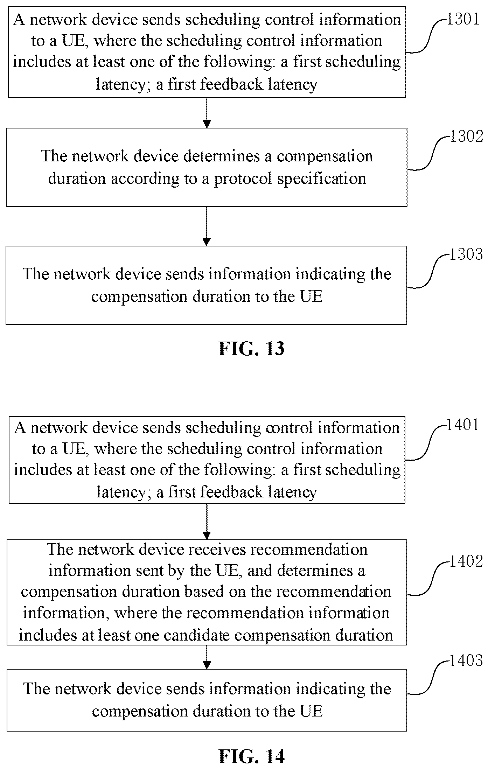

FIG. 13 is another flowchart for sending information according to an embodiment of the present disclosure. As shown in FIG. 13, the method includes S1301-S1303.

S1301: a network device sends scheduling control information to a UE, where the scheduling control information includes at least one of the following: a first scheduling latency; a first feedback latency.

S1302: the network device determines a compensation duration according to a protocol specification.

The implementation of S1302 is the same as that of S503, and will not be repeated here.

S1303: the network device sends information indicating the compensation duration to the UE.

FIG. 14 is another flowchart for sending information according to an embodiment of the present disclosure. As shown in FIG. 14, the method includes S1401-S1403.

S1401: a network device sends scheduling control information to a UE, where the scheduling control information includes at least one of the following: a first scheduling latency; a first feedback latency.

S1402: the network device receives recommendation information sent by the UE, and determines a compensation duration based on the recommendation information, where the recommendation information includes at least one candidate compensation duration.

S1403: the network device sends information indicating the compensation duration to the UE.

An embodiment of the present disclosure provides a method for receiving information, which is performed by a user equipment.

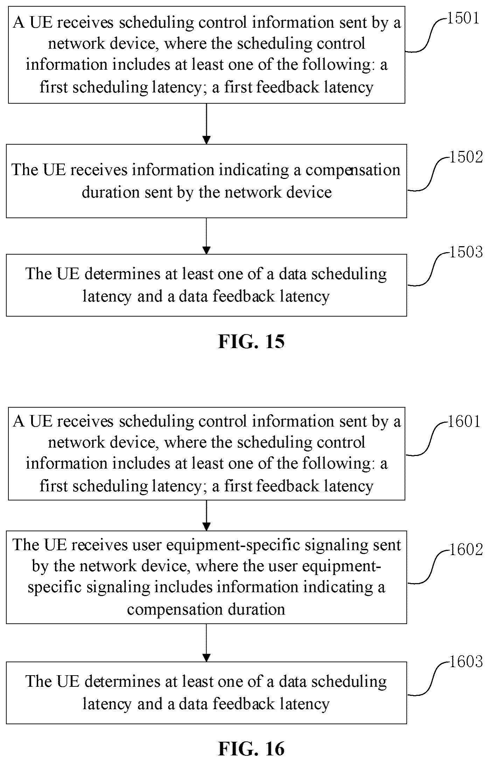

FIG. 15 is a flowchart for receiving information according to an embodiment of the present disclosure. As shown in FIG. 15, the method includes S1501-S1503.

S1501: a UE receives scheduling control information sent by a network device, where the scheduling control information includes at least one of the following: a first scheduling latency; a first feedback latency.

The content of the scheduling control information in S1501 is the same as that in S201, and will not be repeated here.

S1502: the UE receives information indicating a compensation duration sent by the network device.

The content of the compensation duration in S1502 is the same as that in S203, and will not be repeated here.

S1503: the UE determines at least one of a data scheduling latency and a data feedback latency.

The implementation of S1503 is the same as that of S205, and will not be repeated here.

In the embodiment of the present disclosure, in response to the problem that after a UE receives data sent by a network device, it needs a period of time to collect energy before responding to the network device or performing corresponding operations, in order to ensure scheduling flexibility and enable the network device to schedule users on different time domain resources, a first scheduling latency and a first feedback latency are provided, and to account for energy collecting, a compensation duration is provided. The network device sends to the UE the first scheduling latency and/or the first feedback latency, as well as the compensation duration, and the UE determines, according to the received first scheduling latency and/or first feedback latency, as well as the compensation duration, the time required from energy collecting to having sufficient energy to respond to the network device or perform corresponding operations, thereby allowing the UE to complete the response to the network device or to perform corresponding operations according to the determined time.

FIG. 16 is another flowchart for receiving information according to an embodiment of the present disclosure. As shown in FIG. 16, the method includes S1601-S1603.

S1601: a UE receives scheduling control information sent by a network device, where the scheduling control information includes at least one of the following: a first scheduling latency; a first feedback latency.

S1602: the UE receives user equipment-specific signaling sent by the network device, where the user equipment-specific signaling includes information indicating a compensation duration.

S1603: the UE determines at least one of a data scheduling latency and a data feedback latency.

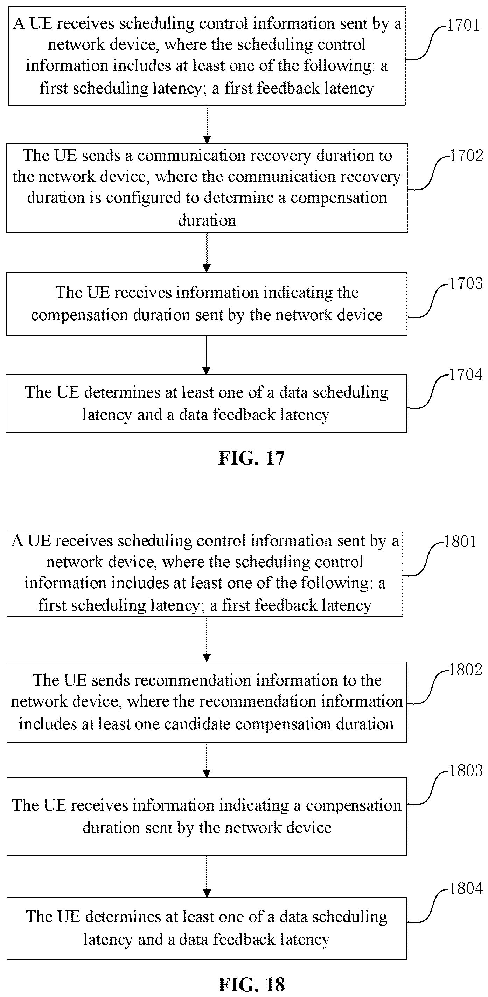

FIG. 17 is another flowchart for receiving information according to an embodiment of the present disclosure. As shown in FIG. 17, the method includes S1701-S1704.

S1701: a UE receives scheduling control information sent by a network device, where the scheduling control information includes at least one of the following: a first scheduling latency; a first feedback latency.

S1702: the UE sends a communication recovery duration to the network device, where the communication recovery duration is configured to determine a compensation duration.

S1703: the UE receives information indicating the compensation duration sent by the network device.

S 1704: the UE determines at least one of a data scheduling latency and a data feedback latency.

FIG. 18 is another flowchart for receiving information according to an embodiment of the present disclosure. As shown in FIG. 18, the method includes S1801-S1804.

S1801: a UE receives scheduling control information sent by a network device, where the scheduling control information includes at least one of the following: a first scheduling latency; a first feedback latency.

S1802: the UE sends recommendation information to the network device, where the recommendation information includes at least one candidate compensation duration.

S1803: the UE receives information indicating a compensation duration sent by the network device.

S1804: the UE determines at least one of a data scheduling latency and a data feedback latency.

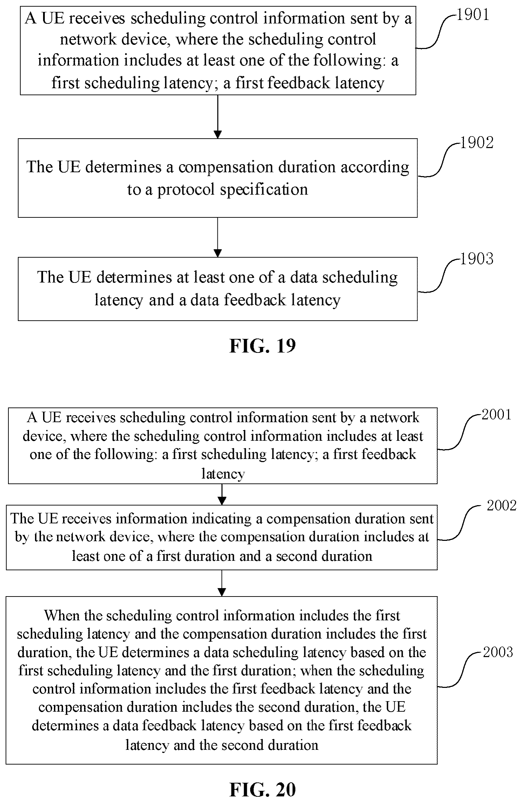

FIG. 19 is another flowchart for receiving information according to an embodiment of the present disclosure. As shown in FIG. 19, the method includes S1901-S1903.

S1901: a UE receives scheduling control information sent by a network device, where the scheduling control information includes at least one of the following: a first scheduling latency; a first feedback latency.

S1902: the UE determines a compensation duration according to a protocol specification.

S1903: the UE determines at least one of a data scheduling latency and a data feedback latency.

FIG. 20 is another flowchart for receiving information according to an embodiment of the present disclosure. As shown in FIG. 20, the method includes S2001-S2003.

S2001: a UE receives scheduling control information sent by a network device, where the scheduling control information includes at least one of the following: a first scheduling latency; a first feedback latency.

S2002: the UE receives information indicating a compensation duration sent by the network device, where the compensation duration includes at least one of a first duration and a second duration.

S2003: when the scheduling control information includes the first scheduling latency and the compensation duration includes the first duration, the UE determines a data scheduling latency based on the first scheduling latency and the first duration; when the scheduling control information includes the first feedback latency and the compensation duration includes the second duration, the UE determines a data feedback latency based on the first feedback latency and the second duration.

The implementation of S2003 is the same as that of S805, and will not be repeated here.

It should be noted that the embodiment of the present disclosure is described by taking receiving information indicating the compensation duration sent by the network device as an example. In another embodiment, when the compensation duration is determined according to the protocol and the compensation duration includes at least one of the first duration and the second duration, S2003 can also be executed after determining the compensation duration according to the protocol, to determine the data scheduling latency and the data feedback latency.

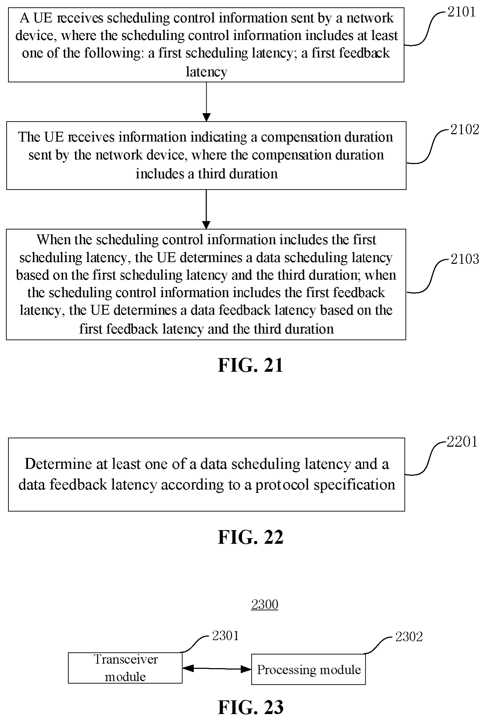

FIG. 21 is another flowchart for receiving information according to an embodiment of the present disclosure. As shown in FIG. 21, the method includes S2101-S2103.

S2101: a UE receives scheduling control information sent by a network device, where the scheduling control information includes at least one of the following: a first scheduling latency; a first feedback latency.

S2102: the UE receives information indicating a compensation duration sent by the network device, where the compensation duration includes a third duration.

S2103: when the scheduling control information includes the first scheduling latency, the UE determines a data scheduling latency based on the first scheduling latency and the third duration; when the scheduling control information includes the first feedback latency, the UE determines a data feedback latency based on the first feedback latency and the third duration.

The implementation of S2103 is the same as that of S905, and will not be repeated here.

It should be noted that the embodiment of the present disclosure is described by taking receiving information indicating the compensation duration sent by the network device as an example. In another embodiment, when the compensation duration is determined according to the protocol and the compensation duration includes the third duration, S2103 can also be executed after determining the compensation duration according to the protocol, to determine the data scheduling latency and the data feedback latency.

FIG. 22 is a flowchart for determining latency information according to an embodiment of the present disclosure. As shown in FIG. 22, the method includes S2201.

S2201: determine at least one of a data scheduling latency and a data feedback latency according to a protocol specification.

When data information scheduled by the scheduling control information is data information including cell public information, the data scheduling latency and the data feedback latency are specified by the protocol. For example, the data information is PDSCH including SI (System Information, System Information) and paging information. The data information including cell public information needs to be received by a plurality of UEs in the cell, so for the data information including cell public information, the data scheduling latency or data feedback latency needs to meet the capability characteristics of the plurality of UEs.

Based on the same concept as the above method embodiments, an embodiment of the present disclosure further provides an electronic device, which can have the functions of the network device in the above method embodiments and is configured to execute the steps performed by the network device provided in the above embodiments. The functions can be implemented by hardware, by software, or by hardware executing corresponding software. The hardware or software includes one or more modules corresponding to the above functions.

In a possible implementation, the electronic device 2300 as shown in FIG. 23 can be used as the network device involved in the above method embodiments and execute the steps performed by the network device in the above method embodiments.

The electronic device 2300 includes a transceiver module 2301 and a processing module 2302.

The transceiver module 2301 is configured to send scheduling control information to a user equipment;
the transceiver module 2301 further configured to send information indicating a compensation duration to the user equipment;
where the scheduling control information includes at least one of the following:
   a first scheduling latency configured to determine a data scheduling latency, where the data scheduling latency represents an interval between a first time unit and a second time unit, the first time unit is a time unit in which the scheduling control information is located, and the second time unit is a time unit in which data information scheduled by the scheduling control information is located;
   a first feedback latency configured to determine a data feedback latency, where the data feedback latency represents an interval between a third time unit and a fourth time unit, the third time unit is a time unit in which data information scheduled by the scheduling control information is located, the fourth time unit is a time unit in which feedback information is located, and the feedback information is for the data information scheduled by the scheduling control information.

In some possible implementations, when the data information scheduled by the scheduling control information includes a plurality of pieces of data information, the second time unit is a time unit in which the first piece of data information among the plurality of pieces of data information is located, the third time unit is a time unit in which any one piece of data information among the plurality of pieces of data information is located, and the feedback information is for at least one piece of data information among the plurality of pieces of data information.

In some possible implementations, when the data information scheduled by the scheduling control information is downlink data information, the scheduling control information includes at least one of the first scheduling latency and the first feedback latency.

In some possible implementations, when the data information scheduled by the scheduling control information is uplink data information, the scheduling control information includes the first scheduling latency.

In some possible implementations, the transceiver module 2301 is further configured to send user equipment-specific signaling to the user equipment, where the user equipment-specific signaling includes the information indicating the compensation duration.

In some possible implementations,
the transceiver module 2301 is further configured to receive a communication recovery duration sent by the user equipment;
the processing module 2302 is configured to determine the compensation duration based on the communication recovery duration.

In some possible implementations, the transceiver module 2301 is configured to receive recommendation information sent by the user equipment, where the recommendation information includes at least one candidate compensation duration.

In some possible implementations, the compensation duration includes at least one of a first duration and a second duration, where the first duration is configured to compensate for the first scheduling latency, and the second duration is configured to compensate for the first feedback latency.

In some possible implementations, a sum of the first duration and the first scheduling latency is the data scheduling duration, and a sum of the second duration and the first feedback latency is the data feedback latency.

In some possible implementations, the processing module 2302 is configured to determine at least one of the first duration and the second duration according to a protocol specification.

In some possible implementations, the compensation duration includes a third duration, where the third duration is configured to compensate for the first scheduling latency and the first feedback latency.

In some possible implementations, a sum of the third duration and the first scheduling latency is the data scheduling duration, and a sum of the third duration and the first feedback latency is the data feedback latency.

In some possible implementations, the processing module 2302 is configured to determine the third duration according to a protocol specification.

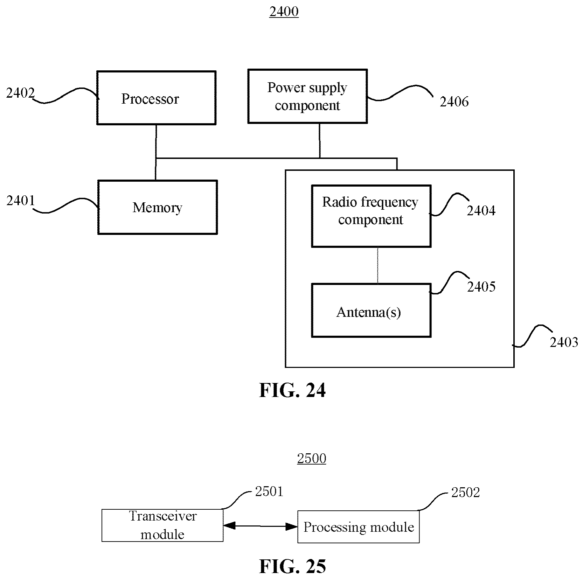

When the electronic device is a network device, its structure can be as shown in FIG. 24. As shown in FIG. 24, the electronic device 2400 includes a memory 2401, a processor 2402, a transceiver component 2403, and a power supply component 2406. The memory 2401 is coupled with the processor 2402 and can be configured to store programs and data necessary for the electronic device 2400 to implement various functions. The processor 2402 is configured to support the electronic device 2400 to execute corresponding functions in the above methods, which can be implemented by invoking programs stored in the memory 2401. The transceiver component 2403 may be a wireless transceiver and can be configured to support the electronic device 2400 to receive signaling and/or data and send signaling and/or data through a wireless air interface. The transceiver component 2403 can also be called a transceiver unit or a communication unit. The transceiver component 2403 may include a radio frequency component 2404 and one or more antennas 2405, where the radio frequency component 2404 may be a remote radio unit (remote radio unit, RRU), and specifically can be configured for transmission of radio frequency signals and conversion between radio frequency signals and baseband signals, and the one or more antennas 2405 can specifically be configured for radiation and reception of radio frequency signals.

When the electronic device 2400 needs to send data, the processor 2402 can perform baseband processing on the data to be sent, output a baseband signal to the radio frequency unit, and the radio frequency unit performs radio frequency processing on the baseband signal and then sends the radio frequency signal through the antenna(s) in the form of electromagnetic waves. When data is sent to the electronic device 2400, the radio frequency unit receives a radio frequency signal through the antenna(s), converts the radio frequency signal into a baseband signal, and outputs the baseband signal to the processor 2402, and the processor 2402 converts the baseband signal into data and processes the data.

Based on the same concept as the above method embodiments, an embodiment of the present disclosure further provides an electronic device, which can have the functions of the user equipment in the above method embodiments and is configured to execute the steps performed by the user equipment provided in the above embodiments. The functions can be implemented by hardware, by software, or by hardware executing corresponding software. The hardware or software includes one or more modules corresponding to the above functions.

In a possible implementation, the electronic device 2500 as shown in FIG. 25 can be used as the user equipment involved in the above method embodiments and execute the steps performed by the user equipment in the above method embodiments.

The electronic device 2500 includes a transceiver module 2501 and a processing module 2502.

The transceiver module 2501 is configured to receive scheduling control information sent by a network device;
the transceiver module 2501 further configured to receive information indicating a compensation duration sent by the network device;
the processing module 2502 is configured to determine at least one of a data scheduling latency and a data feedback latency;
where the scheduling control information includes at least one of the following:
   a first scheduling latency configured to determine the data scheduling latency, where the data scheduling latency represents an interval between a first time unit and a second time unit, the first time unit is a time unit in which the scheduling control information is located, and the second time unit is a time unit in which data information scheduled by the scheduling control information is located;
   a first feedback latency configured to determine the data feedback latency, where the data feedback latency represents an interval between a third time unit and a fourth time unit, the third time unit is a time unit in which data information scheduled by the scheduling control information is located, the fourth time unit is a time unit in which feedback information is located, and the feedback information is for the data information scheduled by the scheduling control information.

In some possible implementations, when the data information scheduled by the scheduling control information includes a plurality of pieces of data information, the second time unit is a time unit in which the first piece of data information among the plurality of pieces of data information is located, the third time unit is a time unit in which any one piece of data information among the plurality of pieces of data information is located, and the feedback information is for at least one piece of data information among the plurality of pieces of data information.

In some possible implementations, when the data information scheduled by the scheduling control information is downlink data information, the scheduling control information includes at least one of the first scheduling latency and the first feedback latency.

In some possible implementations, when the data information scheduled by the scheduling control information is uplink data information, the scheduling control information includes the first scheduling latency.

In some possible implementations, the transceiver module 2501 is further configured to receive user equipment-specific signaling sent by the network device, where the user equipment-specific signaling includes the information indicating the compensation duration.

In some possible implementations, the transceiver module 2501 is further configured to send a communication recovery duration to the network device, where the communication recovery duration is configured to determine the compensation duration.

In some possible implementations, the transceiver module 2501 is further configured to send recommendation information to the network device, where the recommendation information includes at least one candidate compensation duration.

In some possible implementations, the compensation duration includes at least one of a first duration and a second duration, where the first duration is configured to compensate for the first scheduling latency, and the second duration is configured to compensate for the first feedback latency.

In some possible implementations, the processing module 2502 is configured to determine at least one of the first duration and the second duration according to a protocol specification.

In some possible implementations,
the processing module 2502 is configured to determine the data scheduling latency based on the first scheduling latency and the first duration;
the processing module 2502 is configured to determine the data feedback latency based on the first feedback latency and the second duration.

In some possible implementations, the processing module 2502 is configured to determine a sum of the first scheduling latency and the first duration as the data scheduling latency.

In some possible implementations, the processing module 2502 is configured to determine a sum of the first feedback latency and the second duration as the data feedback latency.

In some possible implementations, the compensation duration includes a third duration, where the third duration is configured to compensate for the first scheduling latency and the first feedback latency.

In some possible implementations, the processing module 2502 is configured to determine the third duration according to a protocol specification.

In some possible implementations,
the processing module 2502 is configured to determine the data scheduling latency based on the first scheduling latency and the third duration;
the processing module 2502 is configured to determine the data feedback latency based on the first feedback duration and the third duration.

In some possible implementations, the processing module 2502 is configured to determine a sum of the first scheduling latency and the third duration as the data scheduling latency.

In some possible implementations, the processing module 2502 is configured to determine a sum of the first feedback latency and the third duration as the data feedback latency.

In some possible implementations, the processing module 2502 is configured to determine at least one of the data scheduling latency and the data feedback latency according to a protocol specification.

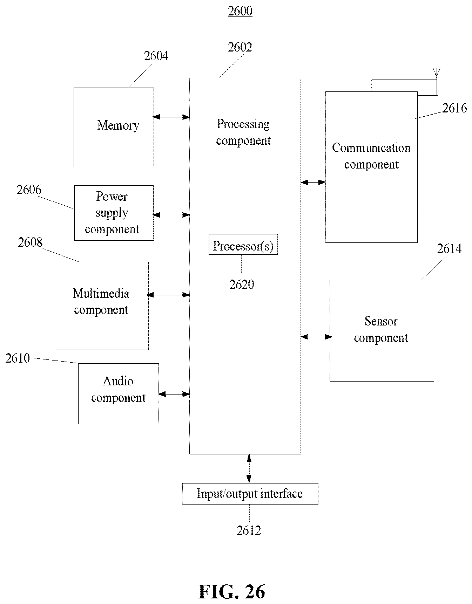

When the electronic device is a user equipment, its structure can be as shown in FIG. 26. The electronic device 2600 may be a mobile phone, a computer, a digital broadcasting terminal, a messaging device, a game console, a tablet device, a medical device, a fitness device, a personal digital assistant, etc.

Referring to FIG. 26, the electronic device 2600 may include one or more of the following components: a processing component 2602, a memory 2604, a power component 2606, a multimedia component 2608, an audio component 2610, an input/output (I/O) interface 2612, a sensor component 2614, and a communication component 2616.

The processing component 2602 generally controls the overall operations of the electronic device 2600, such as operations associated with display, phone calls, data communication, camera operations and recording operations. The processing component 2602 may include one or more processors 2620 to execute instructions to complete all or part of the steps of the above-described methods. In addition, the processing component 2602 may include one or more modules to facilitate interaction between the processing component 2602 and other components. For example, the processing component 2602 may include a multimedia module to facilitate interaction between the multimedia component 2608 and the processing component 2602.

The memory 2604 is configured to store various types of data to support operations on the device 2600. Examples of such data include instructions for any application or method operating on the device 2600, contact data, phonebook data, messages, pictures, videos, and the like. The memory 2604 may be implemented by any type of volatile or non-volatile storage device or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk.

The power supply component 2606 provides power to various components of the electronic device 2600. The power supply component 2606 may include a power management system, one or more power supplies and other components associated with generating, managing and distributing power for the electronic device 2600.

The multimedia component 2608 includes a screen that provides an output interface between the electronic device 2600 and the user. In some embodiments, the screen may include a liquid crystal display (LCD) and a touch panel (TP). If the screen includes a touch panel, the screen can be implemented as a touch screen to receive input signals from the user. The touch panel includes one or more touch sensors to sense touches, swipes and gestures on the touch panel. The touch sensors can not only sense the boundary of a touch action or a swipe action but also detect a duration and a pressure associated with the touch operation or the swipe operation. In some embodiments, the multimedia component 2608 includes a front camera and/or a rear camera. When the device 2600 is in an operation mode, such as a shooting mode or a video mode, the front camera and/or the rear camera can receive external multimedia data. Each of the front camera and the rear camera may be a fixed optical lens system or have focal length and optical zoom capabilities.

The audio component 2610 is configured to output and/or input audio signals. For example, the audio component 2610 includes a microphone (MIC). When the electronic device 2600 is in an operation mode, such as a call mode, a recording mode and a voice recognition mode, the microphone is configured to receive external audio signals. The received audio signals may be further stored in the memory 2604 or sent via the communication component 2616. In some embodiments, the audio component 2610 further includes a speaker for outputting audio signals.

The I/O interface 2612 provides an interface between the processing component 2602 and a peripheral interface module, and the peripheral interface module may be a keyboard, a click wheel, buttons or the like. These buttons may include, but are not limited to, a home button, a volume button, a start button and a lock button.

The sensor component 2614 includes one or more sensors for providing status assessments of various aspects for the electronic device 2600. For example, the sensor component 2614 can detect the on/off state of the device 2600, the relative positioning of components such as the display and the keypad of the electronic device 2600, and the sensor component 2614 can further detect changes in the position of the electronic device 2600 or a component of the electronic device 2600, the presence or absence of user contact with the electronic device 2600, the orientation or acceleration/deceleration of the electronic device 2600, and temperature changes of the electronic device 2600. The sensor component 2614 may include a proximity sensor configured to detect the presence of nearby objects without any physical contact. The sensor component 2614 may further include an optical sensor, such as a CMOS or CCD image sensor, for use in imaging applications. In some embodiments, the sensor component 2614 may further include an acceleration sensor, a gyroscope sensor, a magnetic sensor, a pressure sensor, or a temperature sensor.

The communication component 2616 is configured to facilitate wired or wireless communication between the electronic device 2600 and other devices. The electronic device 2600 can access a wireless network based on a communication standard, such as WiFi, 4G or 5G, or a combination thereof. In an exemplary embodiment, the communication component 2616 receives a broadcast signal or broadcast-related information from an external broadcast management system via a broadcast channel. In an exemplary embodiment, the communication component 2616 further includes a near-field communication (NFC) module to facilitate short-range communication. For example, the NFC module can be implemented based on a radio frequency identification (RFID) technology, an infrared data association (IrDA) technology, an ultra-wideband (UWB) technology, a Bluetooth (BT) technology, and other technologies.

In an exemplary embodiment, the electronic device 2600 may be implemented by one or more application-specific integrated circuits (ASICs), digital signal processors (DSPs), digital signal processing devices (DSPDs), programmable logic devices (PLDs), field programmable gate arrays (FPGAs), controllers, microcontrollers, microprocessors, or other electronic components for performing the above methods.

In an exemplary embodiment, there is further provided a non-transitory computer-readable storage medium including instructions, such as the memory 2604 including instructions, and the instructions can be executed by the processor 2620 of the electronic device 2600 to complete the above methods. For example, the non-transitory computer-readable storage medium may be a ROM, a random access memory (RAM), a CD-ROM, a magnetic tape, a floppy disk, an optical data storage device, and the like.

An embodiment of the present disclosure provides a computer-readable storage medium having stored therein instructions that, when invoked and executed on a computer, cause the computer to perform the method for sending report or the method for receiving indication information.

Other implementations of the present disclosure will be readily apparent to those skilled in the art after considering the specification and practicing the invention disclosed herein. The present application is intended to cover any variations, uses, or adaptive changes of the embodiments of the present disclosure, which follow the general principles of the embodiments of the present disclosure and include common knowledge or conventional technical means in the technical field not disclosed in the present disclosure. The specification and embodiments are only regarded as exemplary, and the true scope and spirit of the embodiments of the present disclosure are pointed out by the following claims.

It should be understood that the embodiments of the present disclosure are not limited to the precise structures described above and shown in the drawings, and various modifications and changes can be made without departing from their scope. The scope of the embodiments of the present disclosure is only limited by the appended claims.

### Industrial Applicability

In response to the problem that after a UE receives data sent by a network device, it needs a period of time to collect energy before responding to the network device or performing corresponding operations, in order to ensure scheduling flexibility and enable the network device to schedule users on different time domain resources, a first scheduling latency and a first feedback latency are provided, and to account for energy collecting, a compensation duration is provided. The network device sends to the UE the first scheduling latency and/or the first feedback latency, as well as the compensation duration, and the UE determines a data scheduling latency and/or a data feedback latency according to the received first scheduling latency and/or first feedback latency, as well as the compensation duration, which enables the UE to determine, according to the data scheduling latency and/or the data feedback latency, the time required from energy collecting to having sufficient energy to respond to the network device or perform corresponding operations, thereby allowing the UE to complete the response to the network device or to perform corresponding operations according to the determined time.

## Claims

1. A method for sending information, performed by a network device, wherein the method comprises:
sending scheduling control information to a user equipment; and
sending information indicating a compensation duration to the user equipment;
wherein the scheduling control information comprises at least one of the following:
a first scheduling latency configured to determine a data scheduling latency, wherein the data scheduling latency represents an interval between a first time unit and a second time unit, the first time unit is a time unit in which the scheduling control information is located, and the second time unit is a time unit in which data information scheduled by the scheduling control information is located;
a first feedback latency configured to determine a data feedback latency, wherein the data feedback latency represents an interval between a third time unit and a fourth time unit, the third time unit is a time unit in which data information scheduled by the scheduling control information is located, the fourth time unit is a time unit in which feedback information is located, and the feedback information is for the data information scheduled by the scheduling control information.

2. The method according to claim 1, wherein when the data information scheduled by the scheduling control information comprises a plurality of pieces of data information, the second time unit is a time unit in which the first piece of data information among the plurality of pieces of data information is located, the third time unit is a time unit in which any one piece of data information among the plurality of pieces of data information is located, and the feedback information is for at least one piece of data information among the plurality of pieces of data information.

3. The method according to claim 1 or 2, wherein when the data information scheduled by the scheduling control information is downlink data information, the scheduling control information comprises at least one of the first scheduling latency and the first feedback latency.

4. The method according to claim 1 or 2, wherein when the data information scheduled by the scheduling control information is uplink data information, the scheduling control information comprises the first scheduling latency.

5. The method according to claim 1, wherein sending the information indicating the compensation duration to the user equipment comprises:
sending user equipment-specific signaling to the user equipment, wherein the user equipment-specific signaling comprises the information indicating the compensation duration.

6. The method according to claim 1, further comprising:
receiving a communication recovery duration sent by the user equipment; and
determining the compensation duration based on the communication recovery duration.

7. The method according to claim 1, further comprising:
receiving recommendation information sent by the user equipment, wherein the recommendation information comprises at least one candidate compensation duration.

8. The method according to claim 1, wherein the compensation duration comprises at least one of a first duration and a second duration, the first duration is configured to compensate for the first scheduling latency, and the second duration is configured to compensate for the first feedback latency.

9. The method according to claim 8, wherein a sum of the first duration and the first scheduling latency is the data scheduling duration, and a sum of the second duration and the first feedback latency is the data feedback latency.

10. The method according to claim 8 or 9, further comprising:
determining at least one of the first duration and the second duration according to a protocol specification.

11. The method according to claim 1, wherein the compensation duration comprises a third duration, and the third duration is configured to compensate for the first scheduling latency and the first feedback latency.

12. The method according to claim 11, wherein a sum of the third duration and the first scheduling latency is the data scheduling duration, and a sum of the third duration and the first feedback latency is the data feedback latency.

13. The method according to claim 11 or 12, further comprising:
determining the third duration according to a protocol specification.

14. A method for receiving information, performed by a user equipment, wherein the method comprises:
receiving scheduling control information sent by a network device;
receiving information indicating a compensation duration sent by the network device; and
determining at least one of a data scheduling latency and a data feedback latency;
wherein the scheduling control information comprises at least one of the following:
a first scheduling latency configured to determine the data scheduling latency, wherein the data scheduling latency represents an interval between a first time unit and a second time unit, the first time unit is a time unit in which the scheduling control information is located, and the second time unit is a time unit in which data information scheduled by the scheduling control information is located;
a first feedback latency configured to determine the data feedback latency, wherein the data feedback latency represents an interval between a third time unit and a fourth time unit, the third time unit is a time unit in which data information scheduled by the scheduling control information is located, the fourth time unit is a time unit in which feedback information is located, and the feedback information is for the data information scheduled by the scheduling control information.

15. The method according to claim 14, wherein when the data information scheduled by the scheduling control information comprises a plurality of pieces of data information, the second time unit is a time unit in which the first piece of data information among the plurality of pieces of data information is located, the third time unit is a time unit in which any one piece of data information among the plurality of pieces of data information is located, and the feedback information is for at least one piece of data information among the plurality of pieces of data information.

16. The method according to claim 14 or 15, wherein when the data information scheduled by the scheduling control information is downlink data information, the scheduling control information comprises at least one of the first scheduling latency and the first feedback latency.

17. The method according to claim 14 or 15, wherein when the data information scheduled by the scheduling control information is uplink data information, the scheduling control information comprises the first scheduling latency.

18. The method according to claim 17, wherein receiving the information indicating the compensation duration sent by the network device comprises:
receiving user equipment-specific signaling sent by the network device, wherein the user equipment-specific signaling comprises the information indicating the compensation duration.

19. The method according to claim 14, further comprising:
sending a communication recovery duration to the network device, wherein the communication recovery duration is configured to determine the compensation duration.

20. The method according to claim 14, further comprising:
sending recommendation information to the network device, wherein the recommendation information comprises at least one candidate compensation duration.

21. The method according to claim 14, wherein the compensation duration comprises at least one of a first duration and a second duration, the first duration is configured to compensate for the first scheduling latency, and the second duration is configured to compensate for the first feedback latency.

22. The method according to claim 21, further comprising:
determining at least one of the first duration and the second duration according to a protocol specification.

23. The method according to claim 22, wherein determining the at least one of the data scheduling latency and the data feedback latency comprises at least one of the following:
determining the data scheduling latency based on the first scheduling latency and the first duration;
determining the data feedback latency based on the first feedback latency and the second duration.

24. The method according to claim 23, wherein determining the data scheduling latency based on the first scheduling latency and the first duration comprises:
determining a sum of the first scheduling latency and the first duration as the data scheduling latency.

25. The method according to claim 23 or 24, wherein determining the data feedback latency based on the first feedback latency and the second duration comprises:
determining a sum of the first feedback latency and the second duration as the data feedback latency.

26. The method according to claim 14, wherein the compensation duration comprises a third duration, and the third duration is configured to compensate for the first scheduling latency and the first feedback latency.

27. The method according to claim 26, further comprising:
determining the third duration according to a protocol specification.

28. The method according to claim 26, wherein determining the at least one of the data scheduling latency and the data feedback latency comprises at least one of the following:
determining the data scheduling latency based on the first scheduling latency and the third duration;
determining the data feedback latency based on the first feedback duration and the third duration.

29. The method according to claim 28, wherein determining the data scheduling latency based on the first scheduling latency and the third duration comprises:
determining a sum of the first scheduling latency and the third duration as the data scheduling latency.

30. The method according to claim 28 or 29, wherein determining the data feedback latency based on the first feedback latency and the third duration comprises:
determining a sum of the first feedback latency and the third duration as the data feedback latency.

31. The method according to claim 14, further comprising:
determining at least one of the data scheduling latency and the data feedback latency according to a protocol specification.

32. An apparatus for sending information, configured in a network device, wherein the apparatus comprises:
a transceiver module, configured to send scheduling control information to a user equipment;
the transceiver module further configured to send information indicating a compensation duration to the user equipment;
wherein the scheduling control information comprises at least one of the following:
a first scheduling latency configured to determine a data scheduling latency, wherein the data scheduling latency represents an interval between a first time unit and a second time unit, the first time unit is a time unit in which the scheduling control information is located, and the second time unit is a time unit in which data information scheduled by the scheduling control information is located;
a first feedback latency configured to determine a data feedback latency, wherein the data feedback latency represents an interval between a third time unit and a fourth time unit, the third time unit is a time unit in which data information scheduled by the scheduling control information is located, the fourth time unit is a time unit in which feedback information is located, and the feedback information is for the data information scheduled by the scheduling control information.

33. An apparatus for receiving information, configured in a user equipment, wherein the apparatus comprises:
a transceiver module, configured to receive scheduling control information sent by a network device;
the transceiver module further configured to receive information indicating a compensation duration sent by the network device; and
a processing module, configured to determine at least one of a data scheduling latency and a data feedback latency;
wherein the scheduling control information comprises at least one of the following:
a first scheduling latency configured to determine the data scheduling latency, wherein the data scheduling latency represents an interval between a first time unit and a second time unit, the first time unit is a time unit in which the scheduling control information is located, and the second time unit is a time unit in which data information scheduled by the scheduling control information is located;
a first feedback latency configured to determine the data feedback latency, wherein the data feedback latency represents an interval between a third time unit and a fourth time unit, the third time unit is a time unit in which data information scheduled by the scheduling control information is located, the fourth time unit is a time unit in which feedback information is located, and the feedback information is for the data information scheduled by the scheduling control information.

34. An electronic device, comprising one or more processors and a memory, wherein,
the memory is configured to store a computer program; and
the one or more processors are configured to execute the computer program to implement the method according to any one of claims 1 to 13.

35. An electronic device, comprising one or more processors and a memory, wherein,
the memory is configured to store a computer program; and
the one or more processors are configured to execute the computer program to implement the method according to any one of claims 14 to 31.

36. A computer-readable storage medium having stored therein instructions that, when invoked and executed on a computer, cause the computer to perform the method according to any one of claims 1 to 13.

37. A computer-readable storage medium having stored therein instructions that, when invoked and executed on a computer, cause the computer to perform the method according to any one of claims 14 to 31.
